# EUROPEAN PATENT APPLICATION

(11) **EP 2 767 948 A1**
(43) Date of publication of application: **20.08.2014**
(21) Application number: 14275024.9
(22) Date of filing: 14.02.2014
(51) Int. Cl.: G06Q 40/04

(54) **Transactional message format data conversion**

(30) Priority: 18.02.2013 US 201361765904 P; 18.03.2013 GB 201304914
(71) Applicant: Rapid Addition Limited, London W1J 7BU (GB)
(72) Inventor: Houston, Kevin, London, W1J 7BU (GB)
(74) Representative: Davies, Elliott

(57) **Abstract**

A method of converting data in a transactional message format is disclosed. The method includes receiving data representing a message in a transactional message format and converting the received data to a format directly useable by an application implementing business logic. The converting step is at least partially implemented on a customised circuit component. A customised circuit component, such as an FPGA or ASIC component, configured to convert data in a transactional message format to a format directly useable by an application implementing business logic, is also disclosed.

## Description

The present invention relates to conversion of data in a transactional message format, in particular financial transactional message formats.

There are several transactions message formats used for electric communication of trade-related messages between financial institutions and the like. Common examples include the Financial Information eXchange (FIX) protocol and the FAST protocol (FIX Adapted for STreaming). Full details of these protocols can be found on websites such as http://www.fixprotocol.org/. In a typical day, a computing device configured to process these types of messages may send/receive very large amounts of messages over very short periods of time: hundreds of millions of messages per day in total are common. As speed is of the essence when processing financial transactions, it is desirable for the messages to be decoded and processed as close as possible to instantaneously.

Conventionally, a relatively large proportion of computing time is spent decoding the messages from a transactional message format, such as FIX, to a format directly useable by an application implementing business logic. Conventional processors on host computers that also execute the business logic/application which processes the binary information derived from the messages (e.g. instructing buying/selling of shares) have been found to limit performance.

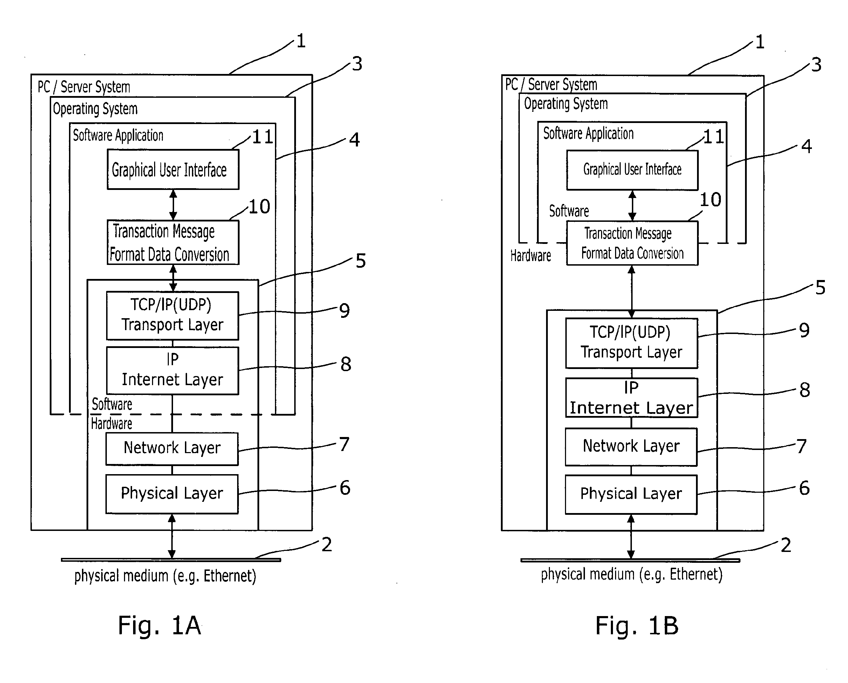

Figure 1A is a schematic diagram of a computing system including a personal computer or server system 1 that is in communication with a physical medium 2, e.g. Ethernet. The computer includes an Operating System (e.g. Linux, Windows, MAC OS) that includes an embedded software application 4. This application includes a Graphical User Interface 11 and a Transactional Message Format Data Conversion software module 10, e.g. written in C++ and /or JAVA. The embedded application further includes a Network Protocol Stack 5 partially implemented in software and partially in hardware, which may comprise an IP (TCP/IP) stack produced by Fraunhofer Heinrich Hertz Institute of Germany, for example. The software implementation includes the Internet Protocol Layer (IP) 9 and the Transport Layer (TCP) 8. The physical implementation includes the Physical Layer 6 and the Network Layer 7.

A known solution to the problem discussed above is to implement the business logic on an FPGA (Field Programmable Gate Array) component connected to the network because such an implementation can normally process FIX messages directly received from the network faster. However, whilst such an FPGA implementation gives performance/speed improvements, implementing business logic using FPGA is a lengthy and specialised programming process. Further, minor modifications to the logic can be time-consuming to implement and the implementation will be specific to the particular requirements of the application, rather than being general purpose, meaning that any changes to the application software requirements can require a new FPGA implementation. Further, such conventional FPGA implementations are only capable of processing messages in a predetermined number of dialects/versions of the FIX format. Modifying them to deal with another dialect leads to the same type of implementation problems.

Embodiments of the present invention are intended to address at least some of the abovementioned problems. Embodiments can comprise a transactional message format converter provided on an FPGA component connected to a host computer, which can convert messages received from the network into machine-readable format directly useable by an application implementing business logic and rapidly transfer the resulting data into the host computer memory for direct use. Thus, embodiments have a technical effect on a process, which is carried on a host computer, outside the FPGA implementing the method, and increase the apparent speed of the computer running the application that uses information derived from the messages.

Embodiments of the invention provide a data driven accelerator for financial messaging that allow the CPUs of a server using the accelerator to spend more of its clock cycles on a business problem and fewer clock cycles on constructing, parsing, sending and receiving messages fitting a particular format. The data driven aspects of the embodiments allow them to handle many interfaces (e.g. all FIX-based interfaces) with a single accelerator rather than custom code solutions that can only handle a specific dialect of a messaging language. Embodiments can accelerate packet oriented data transfer, such as data formatted according to the FIX protocol.

According to a first aspect of the present invention there is provided a method of converting data in a (financial) transactional message format, the method including or comprising:
receiving data representing a message in a transactional message format, and
converting the received data to a format directly useable by an application implementing business logic,
wherein the converting step is at least partially implemented on a customised circuit component.

In use, the customised circuit component may transfer data between a network carrying the data representing the message and a computing device executing the application the implementing business logic.

The step of converting the received data may include referencing a data dictionary comprising data relating to conversion of the transactional message format into the format directly useable by the application that implements the business logic.

The method may include chunking the received data representing the message.

The method may include splitting the received data representing the message into tag data and value data, assigning sequence identifiers to the tag data and the value data, and using the assigned sequence identifier to correctly reunite the tag data and the value data at an output step. The tag data and the value data can therefore be processed by different decode steps. A said decode step may transform different types of said data from ASCII, or other representations, to a binary representation. A "binary representation" does not necessarily mean a binary representation native to the computing device; for example, a FAST binary representation may comprise a compressed binary representation designed to minimise the bandwidth used in transmission. The output step may use a FIFO queue to arrange said data to be output.

The method may include detecting said messages including armoured tags. The armoured tags can be detected by comparison with a stored list of armoured tags. When an armoured tag is encountered a length of an armoured block associated with the armoured tag is decoded by an armoured length decoder.

In some embodiments, the method continues to receive the data representing the message if the converting step is still processing previously received said data. Thus, the receive step can operate at a different clock rate to the converting step.

The method may include performing TCP/IP functions on the data representing the message, the TCP/IP functions being implemented on the customised circuit component.

The method may include performing serialise/de-serialise functions on the data representing the message, the serialise/de-serialise functions being implemented on the customised circuit component.

The format directly useable by the application implementing the business logic may be a binary representation.

The customised circuit component may comprise an FPGA component, an Application-Specific Integrated Circuit (ASIC) or a custom-designed integrated circuit.

According to another aspect of the present invention there is provided a customised circuit component, such as an FPGA or ASIC component, configured to convert data in a transactional message format to a format directly useable by an application implementing business logic, the customised circuit component including:
a receiver for receiving data representing a message in a transactional message format, and
a converter for converting the received data to a format directly useable by an application implementing business logic.

In use, the customised circuit component may transfer data between a network carrying the data representing the message and a computing device executing the application implementing the business logic.

The converter may be configured to build the data in the useable format converted from the message in a temporary data store, e.g. a FIFO queue or output buffer. In some embodiments the useable format version of a portion of the message can transferred to a DMA controller on the customised circuit component before an end of the message reaches the converter.

According to a further aspect of the present invention there is provided a computing system including or comprising:
a processor
a memory;
a communications interface;
an Operating System;
an Operating System-embedded software application;
a hardware-accelerated Transactional Message Format Data Converter capable of providing converted data to the software application, and/or
a Network Protocol Stack at least partially implemented in hardware.

According to another aspect of the present invention there is provided a system inluding a customised circuit component substantially as described herein and at least one computing device in communication with the customised circuit component.

According to other aspects of the present invention there are provided computer program elements comprising: computer code means to make the computer execute methods substantially as described herein. The element may comprise a computer program product.

According to other aspects of the present invention there is provided apparatus including a processor configured to execute methods substantially as described herein.

Whilst the invention has been described above, it extends to any inventive combination of features set out above or in the following description. Although illustrative embodiments of the invention are described in detail herein with reference to the accompanying drawings, it is to be understood that the invention is not limited to these precise embodiments. As such, many modifications and variations will be apparent to practitioners skilled in the art. Furthermore, it is contemplated that a particular feature described either individually or as part of an embodiment can be combined with other individually described features, or parts of other embodiments, even if the other features and embodiments make no mention of the particular feature. Thus, the invention extends to such specific combinations not already described.

The invention may be performed in various ways, and, by way of example only, embodiments thereof will now be described, reference being made to the accompanying drawings in which:
Figure 1A is a schematic diagram of a computing system configured to execute a financial transaction application in a known manner;
Figure 1B is a schematic diagram of a computing system configured to execute a financial transaction application in a manner according to an embodiment of the invention;
Figure 1C is a block diagram illustrating an implementation of the converter processing data flowing between a network and a host device;
Figure 2 is a flowchart illustrating how the converter can convert data on a receive path;
Figure 3 is an illustration of implementation of the receive path;
Figure 4 is an illustration of a transmit path, and
Figure 5 is a graphical illustration of performance using the converter compared to a conventional method.

Figure 1B is a schematic diagram of a computing system including a personal computer or server system 1 that is in communication with a physical medium 2, e.g. Ethernet, over which it can communicate with other computing devices regarding financial transactions. The computer 1 includes an Operating System (e.g. Linux, Windows, MAC OS) that include an embedded software application 4. This application can include a Graphical User Interface 11 at least. The computer 1 further includes a hardware accelerated Transactional Message Format Data Conversion 10, embodiments of which will be described below in more details.

The computer 1 includes a stand-alone Network Protocol Stack 5 implemented in hardware, which may comprise a customised version of an IP (TCP/IP) stack produced by Fraunhofer Heinrich Hertz Institute of Germany, for example. The Stack includes the Internet Protocol Layer (IP) 9, the Transport Layer (TCP) 8, the Physical Layer 6 and the Network Layer 7. In the illustrated implementation, the hardware interfacing the software has moved to a higher level within the application 4, compared to the system of Figure 1A. The complete internet communication can run as a standalone solution with integrated parts of the FIX engine/converter 10. The graphical user interface 11 and some parts of the service and control unit can remain in software. The remaining software part is embedded within the operating system.

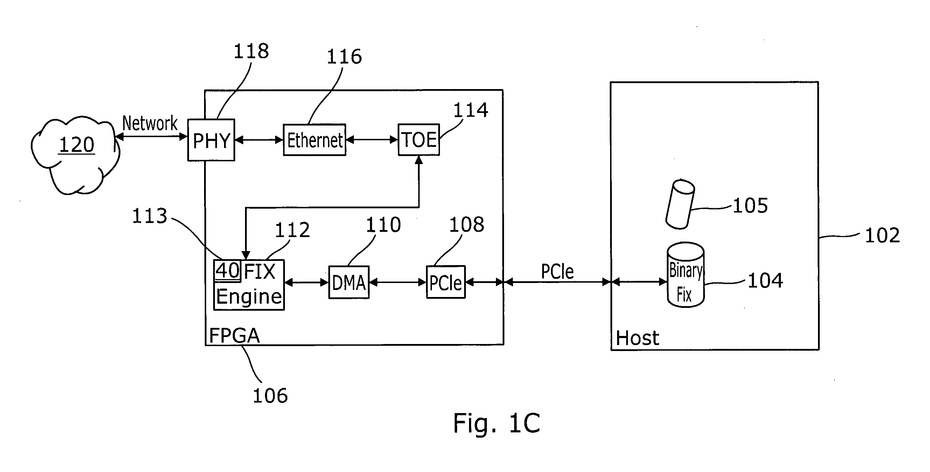

Figure 1C schematically illustrates another system setup that may use an embodiment of the hardware accelerated data format converter. The setup includes a host computing device 102 including a binary FIX store 104 that holds FIX data as native datatype, e.g. a date in 4 bytes as opposed to the string "YYYYMMDD-HH:MM:SS", etc, and a user application 105 implementing business logic and is capable of directly processing the binary FIX data. A typical example of the computing device is a server with an Intel™ processor. Examples of situations where the arrangement/application can be used include FIX routing hubs, in-line risk filters, Smart Order Routers, Liquidity Hubs, Swap Execution Facilities, Exchanges, Multilateral Trading Facilities, Market Gateways and Market Gateway Risk Filters, in combination with trading algorithms.

The computing device 102 is connected to an FPGA component 106 by means of a communications module/network card, such as a Peripheral Component Interconnect Express (PCIe) bus 108, which can handle details of the actual connection. It will be understood that the PCIe bus is just one example of a host interface that could be used; other examples include HyperTransport (HT), PCI or Industry Standard Architecture (ISA) components. The FPGA components can be a PLDA XpressGX5LP or a Bittware S5PH-Q FPGA daughterboard with an Altera Stratix V GX A7 FPGA, or an equivalent product by Xilinx. These are examples only and other boards or FPGAs that can be used. Further, in alternative embodiments, an application-specific integrated circuit (ASIC) component could be used instead of FPGA. Alternatively, a custom-designed integrated circuit could be used. The term "customised circuit component" should be understood as covering all these possibilities and in some cases one or more circuit board/component in communication with each other.

The FPGA component 106 further includes a Direct Memory Access (DMA) controller 110, which can handle the copying of binary FIX messages from the FPGA component to/from the memory of the host computer 102. The DMA controller is connected to an implementation of a FIX message converter 112, the operation of which will be described in detail below. The converter can include, or access, a repository 113 that stores at least one data dictionary. A data dictionary can comprise a lookup table that is used by the converter to determine how to handle each tag=value pair of a FIX format message. In other embodiments, a data dictionary can comprise data relating to conversion of at least one other transactional format messages into the format directly useable by the application 105 that implements business logic. It will be understood that data/reference/search structures other than a look-up table can be used.

The converter 112 is in communication with a TCP Offload Engine (TOE) 114 onboard the FPGA component, which is in communication with an Ethernet component 116 (the logical part of the network stack up to TCP). In alternative embodiments, component 114 may comprise a full TCP/IP implementation rather than a TOE. This is in communication with the physical layer module 118 of the network stack. This component may have some of the logic implemented in other electronics on the daughter-board (fitted to the PCIe slot and upon which the FPGA is mounted) and some in the FPGA. This also allows the FPGA component to transmit/receive data over a Wide Area Network (WAN) 120, which may include the internet. Thus, one or more other computing devices (not shown) can communicate with the computer 102 via the WAN. These other computing devices will typically be the counterparties at the other end of the FIX connection that receive/transmit FIX format messages in ASCII. It will be understood that the illustrated arrangement is exemplary only and in alternative embodiments, some of the components may be omitted, rearranged or replaced and/or further components may be included.

The communications between the FPGA component 106 and the host computer 102 is conducted with DMA transfers over the PCIe bus 108 in the illustrated example; however, other interfaces, for instance, a co-processor socket interface, could be used. There will be two types of message that will need to be transferred to and from the FPGA component: control messages and FIX payloads. The control messages will be to set up the FPGA (starting or stopping a FIX session and similar) or signal events, other than the receipt of a FIX message, back to the host 102. These messages will have a wide variation in size. On the low end they can be messages to start listening for connections on a specified port: this could be just the code for that command and the port number - a few bytes. On the high end will be the loading of data dictionaries - these are likely to run into several kilobytes. The control messages are not a priority for achieving low latency as they are used for setup or signalling exception conditions rather than normal operation. The FIX payloads will be a chunk of data in the binary FIX format produced by the converter 12. These will normally be in the range of 100 to 500 bytes, but there is the possibility of much larger messages. It is desirable to achieve the minimum latency possible in transferring these messages.

The arrows in Figure 1 show a simplified data flow between the components for the transmission/reception of a FIX message. However, the skilled person will appreciate that it is possible that some of the processes are performed in parallel rather than strictly sequentially as suggested by the arrows. For reception, the message will be received by the FPGA component 106 via the physical layer module 118 and pass up through the network stack, with each layer removing its associated header info. When it has been processed by the TCP/IP module 114, the ASCII FIX payload will be written into a FIFO queue by the TCP/IP module in order to be read out and processed by the FIX engine/converter 112. The converter can process the entire message as it comes in. When the end of the message is reached, the converter will have the complete binary FIX message built in its output buffer. This binary message is then passed to the DMA controller 110, which handles transferring it via the PCIe bus 108 to the memory of the host computer 102, where it will be made available to the binary FIX component 104 and application software 105. In some embodiments some of the message can be handed over to the DMA controller before the end of the message reaches the input to the FIX converter. For a message being received and processed this way, a certain amount of data (128 bits in the specific example) is presented to the FIX component 104 on each cycle. This data is processed as it is presented and will be transformed and passed to the next module in the data path. The first module then processes the next chunk of data and passes it on. Each subsequent module works in much the same way (performing a different transformation). The data representing the message will then be spread out throughout the FIX component. The cut through allows this spread to continue into the DMA/PCIe stack. The data at the start of the message (now transformed to the format amenable to direct manipulation by the business logic) can be passed into the DMA/PCIe stack before the end of the ASCII message has been passed into the FIX core (for a long message this might even be before the end of the message has arrived at the FPGA over the network). With this approach, each decoder will have the same processing delay so that output data is produced from the encoders with the same pattern as it is sent to them with a delay of N clock cycles.

Other embodiments may let the message cut through go even further than the DMA on the FPGA. The start of the message could be transferred further through the chain of processes/components that process it ahead of the rest. Examples of where the end of the cut through could be positioned within the data path include: the message existing in main memory; the FIX session layer processing; the user application processing; and/or any point on the resulting send path for a response (or any other action the user application might take). Transmission can comprise substantially the same process in reverse.

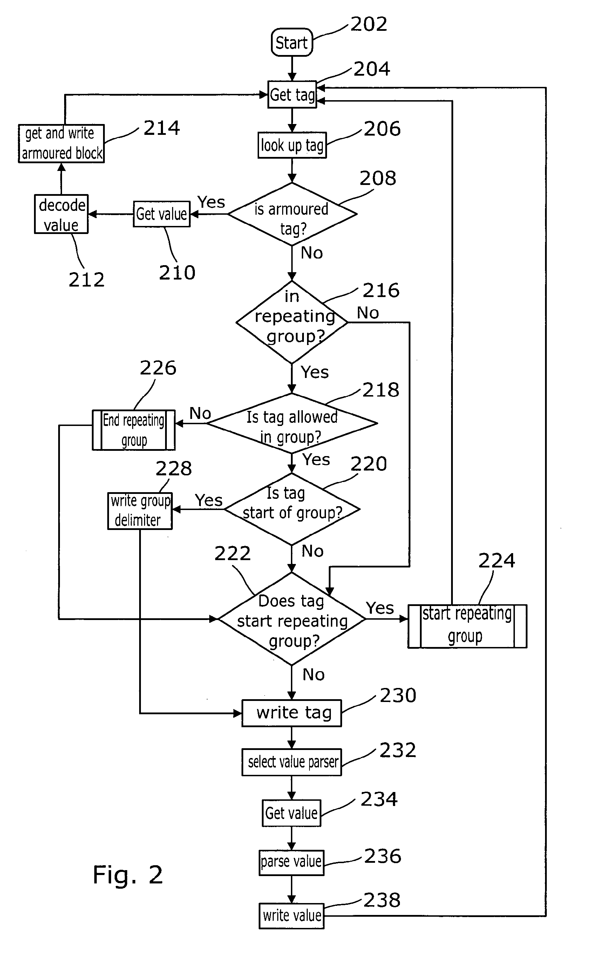

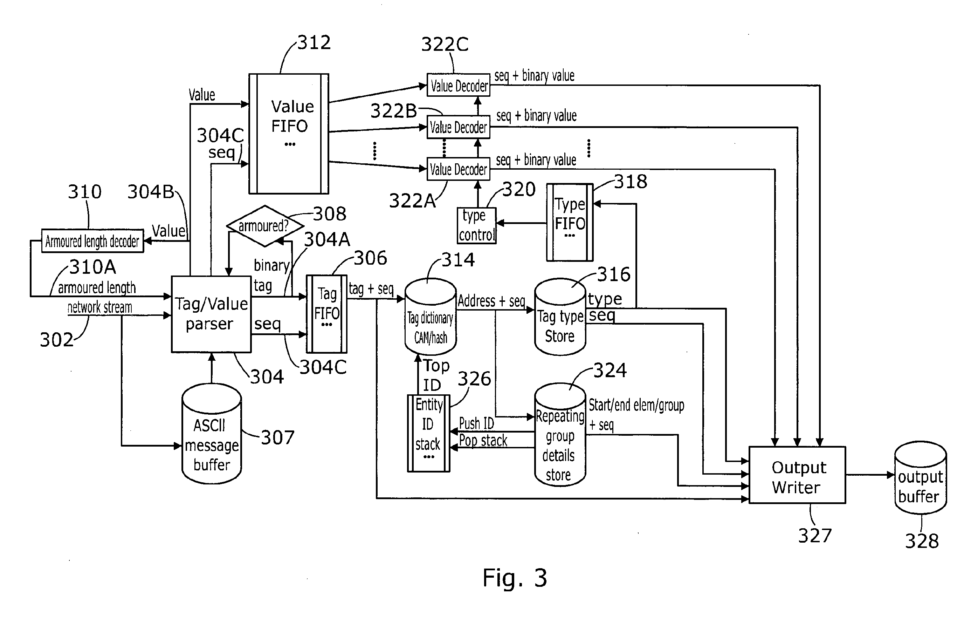

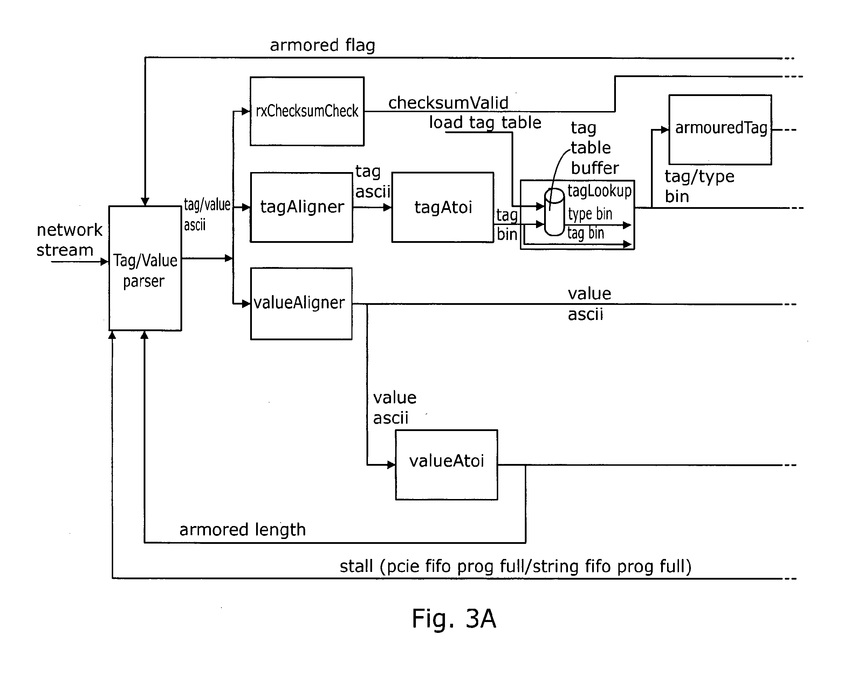

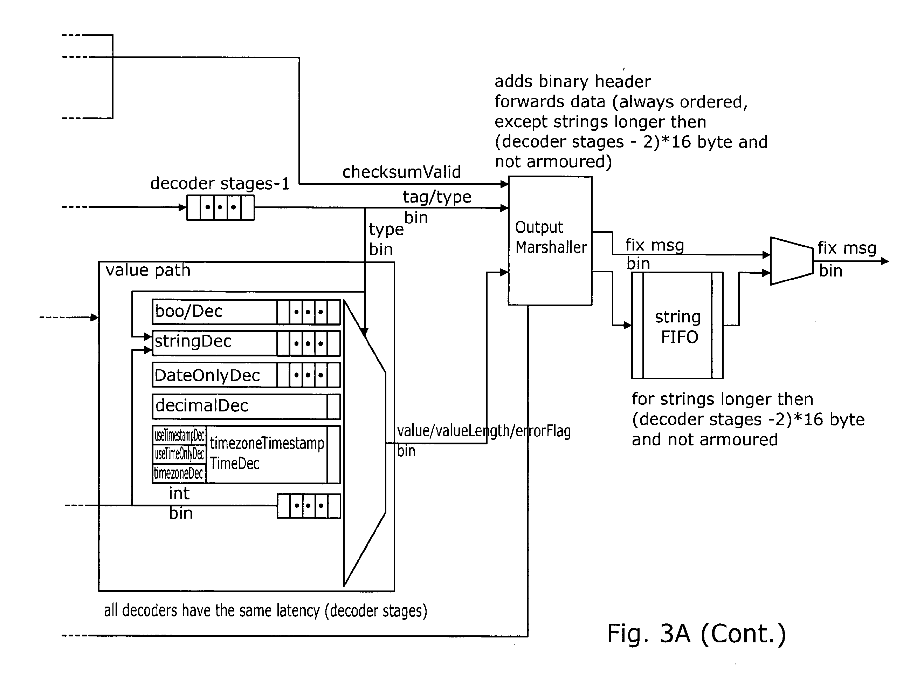

The receive path can be designed to implement the simplified FIX parsing logic shown in Figure 2 and an example implementation is shown in Figure 3. The skilled person will appreciate that the items in these Figures are exemplary only and that in alternative embodiments, some of them may be omitted and/or re-ordered. Further, the method can be implemented using any suitable FPGA programming technique/data structures.

The data will enter the receive path from the network stack 302/120 and enter a tag value chunker/parser 304 on the FPGA component 106 (see also steps 202, 204, 206 of Figure 2). This component splits the stream into tag/value pairs 304A/304B and emits these, along with a sequence number 304C that will allow them to travel through their different decode paths and be reunited at the output marshalling stage to be written to the binary FIX together. In alternative embodiments, a pipeline implementation can be used instead of sequence numbers and out of order processing. The tags and values each enter a FIFO queue 306 at the output of the tag value chunker 304. This allows the chunker to continue reading data from the network if the downstream processing is busy and gives the possibility of operating the chunker at a different clock rate from the rest of the processing. The can be facilitated by an ASCII buffer 307.

Armoured tags need special handling by the converter 112. A module 308 looks at the tag numbers emitted by the chunker 304 and passes back whether or not they are armoured tags (this can be determined by comparison with a list of armoured tags rather than going through the full tag lookup procedure). When an armoured tag is encountered the length 310A of the armoured block is decoded by an armoured length decoder 310 (see also steps 210, 212, 214) referencing the data dictionary 113 and passed back to the chunker 304. The chunker then switches into armoured tag mode and copies the data from the network to a value FIFO 312, decrementing the length as the data passes through. In alternative embodiments, a temporary data store other than a FIFO can be used. When the length reaches zero the chunker 304 switches back to normal (non-armoured) operation.

The tag number is used along with the current entity ID to lookup the location of the tag details in a tag dictionary 314. The tag details then give the type (by looking up a tag type store 316) for the tag value decoding, which is passed up to the value decoding path (comprising a type FIFO 318, a type control module 320 and a set of value decoders 322A - 322N). In alternative embodiments, a temporary data store other than a FIFO can be used. If this tag triggers any repeating group - by comparing with values stored in a repeating group details store 324 (see also steps 216, 218, 220, 222, 224, 226, 228) - start or end, in which case the appropriate delimiters are sent to the output marshalling and an entity ID stack 326 will be popped or pushed.

The value decoders 322A - 322N in the value decoder path transform the different types of data from ASCII to binary representations and select which of them is to be used, based on the type information provided by the tag lookup using the store 316. The decoder selection can be achieved by a MUX between the type FIFO 318 and the decoders, although in other versions all the decoders can work on the ASCII data in parallel, with the one that actually writes to the output being selected later on to get the tag lookup off the critical path if it is found to be too slow.

The output marshalling writer 327 accepts data from the tag lookup 316 and value decode paths 322 with sequence numbers and assembles these into an output buffer 328 (see also steps 230, 232 234, 236, 238).

For completeness, further detailed information regarding FIX messages and their conversion into binary representation will now be given. Conventional FIX messages are made up of so called tag-value pairs: an integer tag followed by a value of an appropriate type. Excerpts from this binary format specification are given below, which specify how such a message can be constructed in a binary representation, but it will be understood that this is only an example. Messages contain header fields, which are a special group of fields that may be present on all messages, and some of which must be present on all. These fields are generally promoted to special significance during processing of the message, particularly the message type, so that processing appropriate to the type may be applied, and the message sequence number, so that sequence number checking may be enforced. Also of interest are the message sending timestamp, and the sender and target "comp" ids. Some less frequently used header fields relate to global routing, resenting and message specific use of different message formats, the "application versioning".

In order to be able to use the special header fields, in a random access fashion, a special table may be constructed with offsets directly to the appropriate values. When converting a message from ASCII to its binary format, errors may be discovered in the construction of the ASCII message. An error codes table is defined, which generally allows for an error to be substituted for a particular tag/value pair. In most cases the parsing will be able to continue despite errors, so these can be inserted into the binary message and dealt with later. Dealing with errors at a later point, after the conversion of a message into binary is desirable, as some errors may be considered more severe than others, but a more severe error may occur after a less severe one. Action is generally taken on one error only; the most severe one. Placing all errors into the binary message without regard to severity, keeps the parser forward only in its operation.

When implementing a message routing hub, the headers of messages may need to be rewritten, whilst keeping the message bodies unchanged. In some cases message bodies may be created without regard to a particular FIX session, from which the header fields are to be derived. Generally, a message is created headers first, followed by the body, but in these cases the headers are altered or created after the fact. This means that the ordering of header and body data within a binary message needs to be flexible.

Not all possible header fields are covered by the headers table, only the most frequently used sub-set. FIX allows for quite a lot of uncommonly used header fields which can be added to messages, but that do not generally require special promotion for random access. The same flexibility over the time of extra header field creation is required, as for the standard headers.

For the lowest latency possible implementation, the extra flexibility over header and body placement is inconvenient. Implementation in hardware, with cut-through designs, strongly favours forward only read and write construction of binary messages. To summarize, a binary FIX message has the following possible sections within it (not necessarily in the order described in the table below):

| Section | Fields | Optional |
|---|---|---|
| Preamble | Message Format Flags | No |
| | Offset/Length of Extra Header Fields | Yes |
| | Offset/Length of Body Fields | Yes |
| Headers Table | Error Mask | Yes |
| | Promoted Header Fields | Yes |
| Header Fields | Tag/Value Fields (or Error Codes) | No |
| Extra Header Fields | Tag/Value Fields (or Error Codes) | Yes |
| Body Fields | Tag/Value Fields (or Error Codes) | No |

FIX messages composed of tag-value pairs in ASCII, for example, "9=123^", is a length tag specifying a message length of 123 bytes, the '^' character has been placed there to signify ASCII SOH, which is the actual field separator used in ASCII FIX. The tag component of the pair is always an integer, and the value component has a type dependant on the value of the tag, and the particular dialect of FIX in use, as can be determined by looking up the data dictionary. The possible ASCII values are mapped into binary forms as described in the table below:

| Type | Size (bytes) | Description |
|---|---|---|
| Integer | 4 | 32-bit signed integer. |
| Boolean | 4 | 32-bit integer, 0 = false, 1 = true. |
| Decimal | 12 | Two fields. |
| | | 1) 64-bit signed integer mantissa. |
| | | 2) 32-bit signed scale, >= 0. |
| | | The value of the decimal is 'mantissa * 10^ -scale'. |
| String | Variable, minimum 4 | Two fields. |
| | | 1) Length (32-bit signed integer, >= 0). |
| | | 2) String value. Sequence of 'length' 8-bit characters. |
| | | String fields are padded out to the nearest multiple of 4 bytes. Both readers and writers should skip and ignore 0-3 bytes after reading/writing. |
| DateOnly | 4 | Three fields, packed into a 32-bit int |
| | | 1) Day, bits 0-4 as unsigned int, valid range 0-30. |
| | | 2) Month, bits 5-8, unsigned integer, valid range 0-11. |
| | | 3) Year, bits 9-31, unsigned integer. |
| Timestamp | 8 | Uses Unix timestamp format or the .NET timestamp format, determined by the timestamp format flag in the preamble. |
| | | Unix: signed 64-bit integer, >= 0, as the number of milliseconds since midnight January 1st, 1970. |
| | | .NET: Signed 64-bit integer, >= 0, as the number of ticks since midnight January 1st 0001 AD. Each tick is a 100 ns interval. |
| Time | 8 | Same format as timestamp, but number of milliseconds or ticks since midnight of the day in question. |
| TimeZoneOffset | 4 | 32-bit signed integer, >= -24 hrs, <= 24 hrs. Offset from UTC, in minutes. |

In order to support both flexible placement of headers and bodies, and the simplest and lowest latency implementation in hardware, the binary message begins with a set of flags to describe which message sections are present, and how they are ordered. Note that the offset/length fields for extra header tags and body tags are also optional, their presence determines by bits within the message format flags. In the section of 'Tag/Value fields' space has been reserved in the TagType to put the ASCII lengths of the tag number, and its value. If these values have been computed then a flag will be set to indicate they are present.

| Field | Size (bytes) | Offsets (bits) | Description |
|---|---|---|---|
| Message Format Flags | 4 | 0 | Extra header fields offset/length present. |
| | | 1 | Body fields offset/length present |
| | | 2-3 | Headers Table present and placement, 0 not present, 1 start, 2 end. |
| | | 4 | Not used, was previously headers table format. |
| | | 5 | Tag and value length data present. |
| | | 6 | Timetsamp format, 0 unix, 1 .NET. |
| | | 7 | Message is ASCII. |
| | | 8 | Message is fragmented (not used). |
| Offset/Length of Extra Header Fields | 8 | 0-31 | Offset, Integer |
| | | 32-63 | Length, Integer |
| Offset/Length of Body Fields | 8 | 0-31 | Offset, Integer |
| | | 32-63 | Length, Integer |

The headers table contains either the offsets of values within the binary message for various header field values, or in the case of Boolean of Integer values, those values embedded directly into the table. The headers table may be positioned in one of two possible locations within the message; either immediately after the Premable, or at the end of the message. The headers table also comes into 3 flavours, a minimal version, containing only the most mandatory and frequently used header fields, a normal version, and an extended version containing a fuller set of header fields. The minimal version is 24 bytes long, and the full version is made up of the minimal version plus more fields.

| Tag Name | Tag Number | Value Format | Offset (bytes) | Minimal | Normal |
|---|---|---|---|---|---|
| Message Type | 35 | String | 0 | Yes | Yes |
| Sequence Number | 34 | Integer (embedded) | 4 | Yes | Yes |
| SendingTime | 52 | Timestamp | 8 | | Yes |
| senderCompID | 49 | String | 16 | | Yes |
| TargetCompID | 56 | String | 20 | | Yes |
| SenderSubID | 50 | String | 24 | | |
| TargetSubID | 57 | String | 28 | | |
| DeliverToCompID | 128 | String | 32 | | |
| OnBehalfOfCompID | 115 | String | 36 | | |
| ApplicationVersionName | 1128 | String | 40 | | |
| ApplicationExtensionID | 1156 | Integer (embedded) | 44 | | |
| CustomApplicationVersionID | 1129 | String | 48 | | |
| IsPossibleDuplicate | 43 | Boolean (embedded) | 52 | | |
| IsPossibleResend | 97 | Boolean (embedded) | 56 | | |
| OriginalSendingTime | 122 | Timestamp | 60 | | |
| Table Type and Error Mask | | | 8, 24 or 68 | Yes | Yes |

The message header and body fields consists of a sequence of consecutive (TagType, Value) pairs. TagType is a 32-bit signed integer containing four fields, as shown in the table below:

| Bit Offset Range (size bits) | Description |
|---|---|
| 0-14 (15) | Integer tag number unsigned (max 32768). |
| 15-21 (7) | Value length, unsigned (max 128). |
| 22-25 (4) | Tag length, unsigned (max 16). |
| 26-31 (6) | Tag type enum or error code, signed (max 31, min -32). |

The table below is for TagType Enum (normal values):

| Name | Enum Integer | Value Format | comments |
|---|---|---|---|
| Enum | 0 | String | |
| Boolean | 1 | Boolean | |
| Integer | 2 | Integer | |
| Decimal | 3 | Decimal | Float type. |
| String | 4 | String | Used for char, multichar, multistring types too. |
| LoclDateOnly | 5 | DateOnly | Used for local market date. |
| UTCDateOnly | 6 | DateOnly | |
| UTCDateTime | 7 | Timestamp | |
| LTCTimeOnly | 8 | Time | |
| DateTimeWtihTimeZone | 9 | Timestamp, TimeZoneOffset | A tuple of two types, 12 bytes in total. |
| TimeWithTimeZone | 10 | Time, Time7oneOffset | A tuple of two types, 12 bytes in total. |
| RepeatingGroupStart | 11 | Integer | Tag is the numInGroup tag, and value is the number of elements in the group. |
| RepeatingGroupEnd | 12 | None | Tag is the numInGroup tag. |
| RepeatingGroupElementStart | 13 | None | Tag is the numInGroup tag. |

Previous versions of the binary FIX specification used repeating group start and end tags as well as repeating group element start and end tags. This leads to two tags being used together to indicate the start of a repeating group and first element, then end of an element and the start of another element, and the end of the last element and the end of group, when one tag would be sufficient in each case. The RepeatingGroupElementEnd tag has been deprecated and is no longer used, as shown by the following pseudocode:
The following repeating group structure:
   RepeatingGroupStart (count)
      RepeatingGroupElementStart
      ... (Tag/value data)
      RepeatingGroupElementEnd
      RepeatingGroupElementStart
      ... (Tag/value data)
      RepeatingGroupElementEnd
   RepeatingGroupEnd
Has been replaced by:
   RepeatingGroupStart (count)
      ... (Tag/value data)
      RepeatingGroupElementStart
      ... (Tag/value data)
   RepeatingGroupEnd

Errors are written incline into the message body, and are represented in the same way to tags. An error has a TagType Enum with the MSB set to 1 (i.e. bit 31 is true). The error code is the lower 6-bits of the enum value (bits 26-30), with the type of the following value field depending on this number in the same manner as a normal tag, see the table below (which has been split into two parts):
Part I:

| **Name** | **Error Code** | **Value Format** | **Tag Field** |
|---|---|---|---|
| Invalid Tag Number | 0 | String | |
| Required Tags Missing | 1 | Integer | Custom |
| Unknown Tag | 2 | String | Tag |
| Missing Value | 3 | | Tag |
| Unpareable Value | 4 | String | Tag |
| Checksum Invalid | 5 | Integer | |
| Invalid Message Type | 6 | | |
| Duplicate Tag | 7 | | Tag |
| Out of Order Tag | 8 | | Tag |
| Incorrect Num In Group | 9 | | Tag |
| Invalid Application Version | 10 | | |
| Begin String Not Found | 11 | | |
| Invalid or Missing Body Length | 12 | | |
| Unknown Session Version | 13 | String | |
| LenRefers Target Tag Without LenRefers | 14 | | Tag |
| Message Type Missing | 15 | | |
| LenRefers Target Tag Missing | 16 | | Tag |
| Zero Num In Group | 17 | | Tag |
| Default Application Version Not Found | 18 | | |
| Body Length Incorrect | 19 | Integer | |

Part II:

| **Name** | **Description** |
|---|---|
| Invalid Tag Number | Tag is either not parsable as an integer, or is out of range. Value is the raw bytes from the tag start up to (and excluding) the next SOH. |
| Required Tags Missing | The tag fields is used to encode which component the error refers to: |
| | 0 - The Standard Header |
| | 1 - The Message Body |
| | 2 - The current repeating group element |
| | The Integer value holds the number of required tags missing. |
| Unknown Tag | The tag could not be found in the data-dictionary. |
| Missing Value | The tag had no value (no characters between the = and SOH. |
| Unparseable Value | The tag's value was not parsable into the tag's data type, either due to an invalid pattern or an overflow/underflow. |
| Checksum Invalid | The message's checksum was incorrect. The value is the parsed checksum, or -1 if it was unparsable (in which case an Unparsable error should also be present with the raw bytes). |
| Invalid Message Type | The message type tag was present but had an empty value, or the message type could not be found in the data-dictionaries. Which condition it is can be deduced by looking at the other error(s) present. |
| Duplicate Tag | Indicates this tag has already occurred at least once in this message. |
| Out of Order Tag | Indicates the tag occurred out of order inside a repeating group element. |
| Incorrect Num In Group | Indicates the number of parsed elements differed from the declared element count as defined by the group's NumInGroup tag. |
| Invalid Application Version | Indicates the application version could not be located for a FIXT message that is not using the session default. |
| Begin String Not Found | Fatal error. Indicates that the first tag found was not the being string, and that the session is now unrecoverable. |
| Invalid or Missing Body Length | Fatal error. Indicates either the BodyLength was not the 2^{nd} tag, or the BodyLength was missing or not parsable as an integer. |
| Unknown Session Version | Fatal error. Indicates the session version (as reported by the BeginString) was unknown. |
| LenRefers Target Tag Without LenRefers | A len refers target tag (armoured tag containing data) was found without the expected preceding LenRefers length tag. |
| Message Type Missing | No message type field was found. |
| LenRefers Target Tag Missing | A LenRefers tag was parsed, but was not immediately followed by the expected target tag. The tag field is set to the expected target tag. |
| Zero Num In Group | A num-in-group tag was found with a count of zero. |
| Default Application Version Not Found | Indicates the default application version for a FIXT session could not be found on the initial inbound logon message. |
| Body Length Incorrect | The body length reported at the message beginning (tag 9) was incorrect. Value is the actual measured BodyLength. |

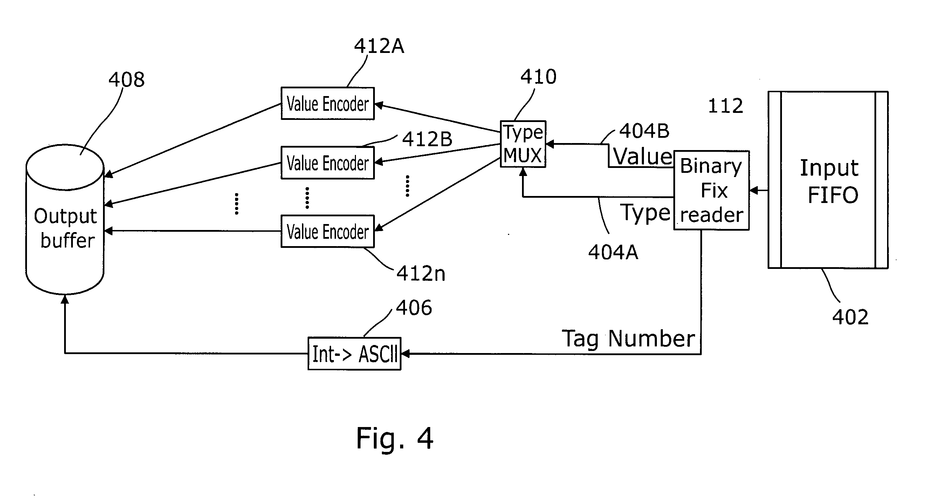

An implementation of the transmit path is shown in Figure 4. This consists of an FIFO queue 402 with the data coming from the DMA engine 110 feeding into the FIX message converter 112, which parses the stream to get tag numbers, types and values 404A, 404B. The tag numbers are translated into ASCII by a translator 406 (which uses known binary to ASCII translation techniques specific to FIX) and written to an output buffer 408 followed by "=". The type information is used to route, via a multiplexer 410, the value to an appropriate encoder 412A - 412N, which transforms it to its ASCII representation and writes it to the output buffer 408, followed by the tag delimiter.

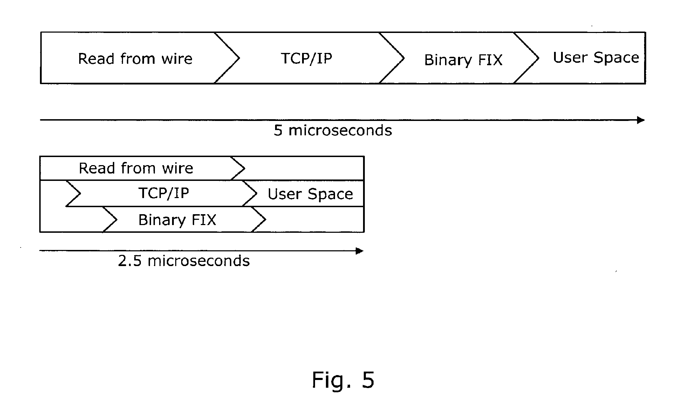

Figure 5 shows graphs illustrating performance differences between a conventional FIX message processor and an embodiment of the present technique. As can be seen, the conventional sequential method (top graph) where a FIX format message is received from the network via a TCP/IP device and converted into binary for use by a host computer is 5 microseconds. In contrast, as some of the processing can be performed in parallel by the embodiment (lower graph), the processing time is 2.5 microseconds. It will be understood that these figures are exemplary only and will vary from implementation to implementation.

Although the embodiment detailed above relates to conversion of FIX format messages, the skilled person will appreciate that it is possible to modify its principles to deal with conversion of other transactional format messages, such as FAST format messages (which are not necessarily in ASCII format), e.g. by using suitable data dictionaries and templates.

The method/system described above results in reduced latency when processing transactional format messages. The CPU of the host computer has much less processing to do as it no longer has to parse FIX messages or convert data types. There is lower CPU utilisation for any given traffic level. Thus, there can be more traffic per box/host computer, resulting in a smaller sever footprint, lower bills for hosting, etc. Embodiments can eliminate jitter caused by garbage collection, or by software implementation, including memory management functions in unmanaged code. The technique also has the advantage of allowing the business logic/application running on the host computer to be programmed using a conventional programming language, such as JAVA™, .Net or C++, thereby saving substantial time and effort compared to the known solution of custom FPGA implementation of business logic. The solution is scalable for several different hardware/software arrangements.

## Claims

1. A method of converting data in a transactional message format, the method including:
receiving data representing a message in a transactional message format, and
converting the received data to a format directly useable by an application implementing business logic,
wherein the converting step is at least partially implemented on a customised circuit component.

2. A method according to claim 1, where, in use, the customised circuit component transfers data between a network carrying the data representing the message and a computing device executing the application the implementing business logic.

3. A method according to claim 1, wherein the step of converting the received data includes referencing a data dictionary comprising data relating to conversion of the transactional message format into the format directly useable by the application that implements the business logic.

4. A method according to claim 3, further including chunking the received data representing the message.

5. A method according to claim 4, further including splitting the received data representing the message into tag data and value data, assigning sequence identifiers to the tag data and the value data, and using the assigned sequence identifier to correctly reunite the tag data and the value data at an output step.

6. A method according to claim 5, wherein the tag data and the value data are processed by different decode steps.

7. A method according to claim 6, wherein a said decode step transforms different types of said data from ASCII, or other representations, to a binary representation.

8. A method according to claim 1, including detecting said messages including armoured tags.

9. A method according to claim 8, wherein the armoured tags are detected by comparison with a stored list of armoured tags.

10. A method according to claim 9, wherein when an armoured tag is encountered a length of an armoured block associated with the armoured tag is decoded by an armoured length decoder.

11. A method according to claim 1, wherein the method continues to receive the data representing the message if the converting step is still processing previously received said data.

12. A method according to claim 11, wherein the receive step operates at a different clock rate to the converting step.

13. A customised circuit component, such as an FPGA or ASIC component, configured to convert data in a transactional message format to a format directly useable by an application implementing business logic, the customised circuit component including:
a receiver for receiving data representing a message in a transactional message format, and
a converter for converting the received data to a format directly useable by an application implementing business logic.

14. A component according to claim 13, wherein the useable format version of a portion of the message is transferred to a DMA controller on the customized circuit component before an end of the message reaches the converter.

15. A computing system including:
a processor
a memory;
a communications interface;
an Operating System;
an Operating System-embedded software application;
a hardware-accelerated Transactional Message Format Data Converter capable of providing converted data to the software application, and/or
a Network Protocol Stack at least partially implemented in hardware.
